# EUROPEAN PATENT SPECIFICATION

(11) **EP 2 580 280 B1**
(45) Date of publication and mention of the grant of the patent: **20.07.2016**
(21) Application number: 11815739.5
(22) Date of filing: 09.06.2011
(51) Int. Cl.: C08L 23/08, C08L 77/00, F41H 5/04, C08L 77/02

(54) **POLYMERIC BLENDS USEFUL IN BALLISTIC APPLICATIONS**
FÜR BALLISTISCHE ANWENDUNGEN GEEIGNETE POLYMERMISCHUNGEN
MÉLANGES POLYMÈRES UTILES DANS DES APPLICATIONS BALISTIQUES

(30) Priority: 11.06.2010 US 353882 P
(43) Date of publication of application: 17.04.2013
(73) Proprietor: E. I. du Pont de Nemours and Company, Wilmington, DE 19898 (US)
(72) Inventor: BOOGH, Louis, CH-1277 Borex (CH); PONT, Nicolas, F-74160 St Julien en Genevois (FR); REBOUILLAT, Serge, F-01170 Echenevex (FR); ROLLAND, Loic, Pierre, F-01220 Divonne les Bains (FR)
(74) Representative: Heinemann, Monica
(86) International application number: PCT/US2011/039758
(87) International publication number: WO 2012/118518

(56) References cited:
- EP-A1- 0 342 244
- WO-A1-2008/106631
- US-A- 5 859 137
- US-A- 5 866 658
- US-A1- 2005 020 762

## Description

### FIELD OF THE INVENTION

The present invention relates to materials comprising polymeric blends having utility in the manufacture of articles intended for civilian and/or military protective systems.

### BACKGROUND OF THE INVENTION

Aramid fibers are a class of heat-resistant and strong synthetic fibers. They can be used in highly demanding applications, such as for example aerospace and military applications, ballistic protection, tyres, and as asbestos substitutes.

In ballistic protection applications, the aramid fiber is usually present as a multitude of superposed woven layers. The high tensile strength of aramid fibers, unlike most polymeric fibers, makes them the material of choice in ballistic protection systems in particular where tough environmental conditions are encountered.

Composite armoring is widely used in for example vehicle applications to protect occupants against bullet, fragment or any other type of impact or associated threats.

Composite armoring incorporates ballistic resistant fibers such as aramid fibers in combination with thermoset, thermoplastic or rubber-like resins to form a self-standing panel or a panel which is to be used in combination with other armoring components to form a protective system.

To achieve the highest possible ballistic protection performance, these resins should not impede the ballistic resistant fibers' capability to absorb the ballistic impact energy by for example reducing its ability to deform and stretch.

Additionally, in vehicle applications, a specific requirement is the performance and durability when exposed to low and high temperatures. Vehicles, aircrafts or buildings are often parked or situated in the exterior for extended time periods, and as an example, high ambient temperature, coupled to solar radiation, can cause their surface and interior to heat up to temperatures exceeding 100 °C, see P. Schwarzer et al, Atlas Technical Conference for Accelerated Ageing and Evaluation, Bad Orb, 2002.

Furthermore, the important heat capacity of the materials used in vehicles, aircrafts or buildings such as steel, glass and concrete allows them to stay warm even for extensive periods after solar radiation ceases and the ambient temperature drops.

At temperatures in excess of 100 °C, thermoplastic polymers having good ballistic protection properties tend to significantly loose rigidity and mechanical strength, which reduces the dimensional stability of the composites made thereof. This reduction of dimensional stability causes the weakening of the fastening points of composite panels, which can lead to a loss in protective effect against ballistic threats.

Because of the heat sensitivity of some thermoplastic resins, crosslinked or partially crosslinked resins have been used for many years with great success and proven durability. Partially crosslinked resins, such as for example neoprene resins, are used in instances where some flexibility of the panels is required or preferred, and thermoset resins, such as modified phenolic resins, are used for more rigid panels.

For example, PVB-phenolic hard armor panels, described in MIL-DTL-62474F, have been used in vehicle ballistic protection applications with proven durability for the last 20 years.

However, thermoplastic resins would be advantageous to use since thermoplastics do not suffer from some of the drawbacks of cross linkable systems, such as the limited shelf-life of intermediates, and would have easier repairability. Also, in contrast to crosslinkable systems such as PVB-phenolic resins, thermoplastic resins do not release hazardous volatile organic components (VOC), which requires special safety during storage, handling and processing.

Nonetheless, thermoplastic resins have had limited success so far, because softer, more flexible resins that show good ballistic protection at ambient temperature are sensitive to heat, and therefore tend to soften even at temperatures below 100°C, leading to a loss in dimensional stability of the composite panels and the reduction of the ballistic protection at elevated temperatures.

There exist thermoplastic resins that display good heat resistance and which maintain rigidity and mechanical strength, even at temperatures in excess of 100°C. However, the thermoplastic resins that maintain rigidity and mechanical strength, even at temperatures in excess of 100°C offer less or limited ballistic protection when used in the manufacture of composite hard armoring.

There is a need for a thermoplastic composition useful in ballistic protection systems which avoids the above problems and provides a lightweight but effective ballistic protection system, even when exposed for a period of time or operating at temperatures of 100 °C or in excess thereof.

WO2009048674 (A2), for example, covers rigid armor applications consolidated with a thermoplastic matrix material, but does not refer to the advantages of using a blend of thermoplastic resins, nor does it address the heat resistance requirements. Furthermore the one selected resin would not be suited for exposures to temperatures above typically 60°C to 80°C where softening and flow under stress will occur.

### SUMMARY OF THE INVENTION

The present invention provides a ballistic protection system comprising
a. at least one ballistic fabric and;
b. at least one thermoplastic composition for use in ballistic applications, wherein the thermoplastic composition comprises at least a first thermoplastic polymer that has a melting point superior to the melting point of a second thermoplastic polymer, and wherein the second thermoplastic is dispersed in a continuous or co-continuous phase of the first thermoplastic polymer, wherein the at least one ballistic fabric is combined with the thermoplastic composition,
wherein the second thermoplastic composition comprises from 35 to 55 weight percent of the thermoplastic composition and wherein the at least one ballistic fabric comprises aromatic polyamide fibers, polybenzimidazole fibers or polybenzoxazole fibers.

An advantage of using the thermoplastic composition in a ballistic system according to the present invention is that the shelf life is almost unlimited for ballistic fabrics pre-impregnated with said thermoplastic composition. A further advantage of using the thermoplastic composition in ballistic protection systems according to the present invention is that the ballistic systems can be lighter than other ballistic protection systems using other thermoplastic resins in particular where threats of different nature are considered, such as in, but not limited to, vehicle or personal armoring systems.

### DETAILED DESCRIPTION

The term copolymer, as used in the below description, includes polymers containing two, three, or more comonomer units.

The present invention solves the problems stated in the background section by providing a thermoplastic composition for the use for manufacturing a ballistic protection system, wherein the thermoplastic composition comprises at least a first thermoplastic polymer that has a melting point superior to the melting point of a second thermoplastic polymer, and wherein the second thermoplastic polymer is dispersed in a continuous or co-continuous phase of the first thermoplastic polymer, wherein the second thermoplastic composition comprises from 35 to 55 weight percent of the thermoplastic composition and wherein the at least one ballistic fabric comprises aromatic polyamide fibers, polybenzimidazole fibers or polybenzoxazole fibers.

The term melting point as used in this description is intended to mean the temperature determined by means of DSC (Differential Scanning Calorimetry) at heating rates of 10K/minute, according to DIN 53765-B-10. It is however known in the art that some materials, of polymeric nature, do not melt according to a very distinct profile but to a more profile range, in particular for example, some amorphous polymers and compatibilized blends, and this is included in the term melting point as used in this description.

Given by way of illustration the term continuous phase as used in this description refers to an uninterrupted three-dimensional matrix that can be selectively dissolved using a selective solvent, as opposed to a discontinuous phase which is present or dispersed in the continuous phase in the form of particles which cannot be selectively dissolved or extracted using a selective solvent.

Given by way of illustration and derived from IUPAC definition, the term co-continuous phase as used in this description refers to the two phases which can both be extracted using a selective solvent leaving the other phase in the form of a three-dimensional network, such as for example an interpenetrating network (IPN), or to only one of the phases which can be fully extracted leaving the other one(s) as partial three-dimensional networks, as for example a semi- interpenetrating network (semi-IPN).

In the case where the thermoplastic polymers are blended using a reactive compatibilizer or a reactive or non-reactive co-polymer, dissolution and extraction of one of the phases can become difficult, but the phase structures described above as way of illustration remain valid.

The thermoplastic composition as used in the invention comprises a first thermoplastic polymer, which provides for the continuous or co-continuous phase of the thermoplastic composition.

The first thermoplastic polymer according to the present invention can be chosen among polymers such as for example, but not limited to, polyvinyls, polyolefins and/or polycondensates, like for example, but not limited to, polyethylene, polyethylene copolymers, polypropylene, polypropylene copolymers, polybutylene, polybutylene copolymers, polycarbonates, polyamides, polyamide copolymers, polyimides, polyesters, polyurethanes, polyurethane copolymers, polyvinyls, polyacrylics, polyacrylonitrils, polysulfones, thermoplastic silicone copolymers thermoplastic elastomeric block copolymers such as for example, but not limited to, acrylonitrile-butadiene-styrene, polyisopropene-polyethylene-butylene-polystyrene or polystyrene-polyisoprene-polystyrene block copolymers, polyether-ester block copolymers, and/or combinations thereof.

The first thermoplastic polymer suitable for the present invention is preferably chosen among the above mentioned polymers having a melting point in the range of 75°C to 400°C, more preferably 110°C to 300°C and most preferably 140°C to 230°C.

Preferably, the first thermoplastic polymer according to the present invention can be chosen from polypropylene, polyamide, polyester polymers or copolymers thereof and/or combinations thereof.

More preferably, the first thermoplastic polymer according to the present invention can be chosen from polyamides, such as, but not limited to, aliphatic polyamides and/or semi-aromatic polyamides.

The polyamides suitable for the present invention can be crystalline, semi-crystalline, amorphous polyamides and/or combinations thereof.

The terms crystalline, semi-crystalline and amorphous are well-known to those skilled in the art. Amorphous polyamides refers to those polyamides which are lacking in crystallinity as shown by the lack of an endotherm crystalline melting peak in a DSC measurement according to ASTM D-3417, 10 K/minute heating rate.

It is known in the art that high amine-end content or high acid-end content polyamides can be obtained by adjusting the ratio of diacid and diamine monomers during polymerization. According to the present invention, preferred polyamides are polyamides having an amine-end content of at least 30 %, more preferably of at least 50%, most preferably of at least 70%.

Preferably, suitable aliphatic polyamides can be chosen among Nylon 6, Nylon 66, Nylon 6/66, Nylon 11, Nylon 12, Nylon 612, Nylon 13, Nylon 1010, and/or combinations thereof.

Most preferably, suitable aliphatic polyamides can be chosen among Nylon 6, Nylon 11, Nylon 12, Nylon 612, Nylon 13, Nylon 1010, and/or combinations thereof.

Preferably, suitable semi-aromatic polyamides can be chosen among Nylon 6T, Nylon 6/6T, Nylon 3T, Nylon 6/3T, Nylon 66/6T, Nylon 10/6T, Nylon 12/6T, Nylon 10/3T, Nylon 12/3T, and/or combinations thereof.
Amorphous polyamides can preferably be used in a range up to 10 weight percent based on the total weight of the polyamides. Preferred is the use of crystalline, semi-crystalline polyamides and/or combinations thereof.

The first thermoplastic polymer according to the present invention can be chosen such as to have a melting point that is higher than the expected peak operating temperature. The expected peak operating temperature is defined as the maximal temperature to which the thermoplastic composition of the present invention comprising the first thermoplastic polymer will be exposed during its use. The expected peak operating temperature will vary according to the climatic situation, geographical zone, and/or seasonal fluctuations encountered and proximity to a heat source.

Preferably, the first thermoplastic polymer can be chosen such as to have a melting point that is at least 5 °C higher than the expected peak operating temperature and than the melting point of the second thermoplastic polymer.

More preferably, the first thermoplastic polymer can be chosen such as to have a melting point that is at least 10 °C higher than the expected peak operating temperature and than the melting point of the second thermoplastic polymer.

Most preferably, the first thermoplastic polymer can be chosen such as to have a melting point that is at least 20 °C higher than the expected peak operating temperature and than the melting point of the second thermoplastic polymer.

As long as the peak operating temperature is below the melting point of the first thermoplastic polymer, the first thermoplastic polymer will provide the thermoplastic composition of the present invention with the necessary rigidity and mechanical strength to retain its shape, even if the peak operating temperature is above the melting point of the second thermoplastic polymer.

The thermoplastic composition according to the invention comprises a second thermoplastic polymer, which is dispersed in the continuous or co-continuous phase of the thermoplastic composition.

The dispersed second thermoplastic polymer can be present as particles which can be spherical particles, elongated spheroid shapes, ellipsoids, network of branched filament-like structures, and/or complex inclusions within the first thermoplastic polymer.

Suitable diameters of the particles of the dispersed second thermoplastic polymer are diameters which are below the diameter of the fiber used in combination with the thermoplastic composition according to the invention for the use in ballistic applications.

Preferably, the diameter of the particles of the dispersed second thermoplastic polymer is in the range of 0.01 µm to 15 µm in diameter, preferably 0.01 µm to 5 µm in diameter and most preferably 0.01 µm to 1 µm.

The diameter, in the case where the dispersed second thermoplastic polymer is present as spherical particles, elongated spheroid shapes, ellipsoids, network of branched filament-like structures, and/or complex inclusions is the smallest characteristic diameter that can be traced within the limits of the particles, that means the spherical particles, spheroid shapes, ellipsoids, network of branched filament-like structures and/or inclusions.

The second thermoplastic according to the present invention must be chosen or tailored by chemical modification or by the use of reactive or non-reactive compatibilizers or copolymers, as described for example in the description below, such as the compatibility with the first thermoplastic results in the formation of the characteristic blend as described above.

The second thermoplastic polymer according to the present invention can be chosen among polymers such as for example, but not limited to, polyvinyls, polyolefins and/or polycondensates, like for example, but not limited to, polyethylene, polyethylene copolymers, polypropylene, polypropylene copolymers, polybutylene, polybutylene copolymers, polyamides, polyamide copolymers, polyesters, polyurethanes, polyurethane copolymers, polyacrylonitrils, polysulfones, thermoplastic silicone copolymers, thermoplastic elastomeric block copolymers such as for example, but not limited to, acrylonitrile-butadiene-styrene, polyisopropene-polyethylene-butylene-polystyrene or polystyrene-polyisoprene-polystyrene block copolymers, polyether-ester block copolymers, and/or combinations thereof.

The second thermoplastic polymer suitable for the present invention is preferably chosen among those mentioned polymers having a melting point in the range of 25°C to 250°C and more preferably 50°C to 150°C.

Preferably, the second thermoplastic polymer according to the present invention can be chosen among polymers such as for example, but not limited to, thermoplastic polyurethanes, polyurethane copolymers, thermoplastic elastomeric block copolymers, like for example, but not limited to, polyisopropene-polyethylene-butylene-polystyrene or polystyrene-polyisoprene-polystyrene block copolymers, or such as for example, but not limited to, polyolefins, like for example, but not limited to, polyethylenes such as for example, but not limited to, low density polyethylenes, very low density polyethylenes, metallocene polyethylenes and/or polyethylene copolymers such as for example, but not limited to, ethylene/α,β-unsaturated C3-C8 carboxylic acid copolymers and/or ethylene/α,β-unsaturated C3-C8 carboxylic acid copolymers partially neutralized with metal salts.

More preferably, the second thermoplastic polymer according to the present invention can be chosen among polyethylene copolymers such as for example, but not limited to, ethylene/α,β-unsaturated C3-C8 carboxylic acid copolymers and/or ethylene/α,β-unsaturated C3-C8 carboxylic acid copolymers partially neutralized with metal salts.

In the case where the second thermoplastic polymer is an ethylene/α,β-unsaturated C3-C8 carboxylic acid copolymer, the α,β-unsaturated C3-C8 carboxylic acid can be chosen from acrylic acid and/or methacrylic acid.

The ethylene/α,β-unsaturated C3-C8 carboxylic acid copolymer is preferably a terpolymer of ethylene, α,β-unsaturated C3-C8 carboxylic acid and α,β-unsaturated C3-C8 dicarboxylic acid.

The α,β-unsaturated C3-C8 dicarboxylic acid can be chosen from maleic acid, maleic anhydride, C1-C4 alkyl half esters of maleic acid, fumaric acid, itaconic acid and itaconic anhydride. Preferably, the α,β-unsaturated C3-C8 dicarboxylic acid can be chosen from maleic anhydride, ethyl hydrogen maleate and methyl hydrogen maleate. Most preferably, the α,β-unsaturated C3-C8 dicarboxylic acid is maleic anhydride, methyl hydrogen maleate and/or combinations thereof.

The ethylene/α,β-unsaturated C3-C8 carboxylic acid/α,β-unsaturated C3-C8 dicarboxylic acid polymer can further comprise up to 40 weight percent of an C1-C8 alkyl acrylate softening comonomer, which is preferably chosen among methyl (meth)acrylate, ethyl (meth)acrylate or n-butyl (meth)acrylate, more preferably from n-butyl acrylate or ethyl (meth)acrylate.

The term softening comonomer as mentioned in this description is well-known to those skilled in the art and refers to comonomers such as the C1-C8 alkyl acrylate mentioned above.

The term (meth)acrylate as mentioned in this description is respectively intended to mean acrylate and methacrylate.

In the ethylene/α,β-unsaturated C3-C8 carboxylic acid/α,β-unsaturated C3-C8 dicarboxylic acid polymer, the α,β-unsaturated C3-C8 carboxylic acid can be present in a range of 2 to 25 weight percent and the α,β-unsaturated C3-C8 dicarboxylic acid can be present in a range of 0.1 to 15 weight percent with the proviso that the α,β-unsaturated C3-C8 carboxylic acid and the α,β-unsaturated C3-C8 dicarboxylic acid are present from 4 to 26 weight percent, and with the further proviso that the total comonomer content, including the C1-C8 alkyl acrylate softening comonomer, does not exceed 50 weight percent.

Most preferably, the second thermoplastic polymer according to the present invention is an ethylene/α,β-unsaturated C3-C8 carboxylic acid copolymer partially neutralized with metal ions, which is commonly referred to as "ionomer". The total percent neutralization is from 5 to 90 percent, preferably 10 to 70 percent, most preferably between 25 and 60 percent of the ionomer.

In the case where the second thermoplastic polymer is an ethylene/α,β-unsaturated C3-C8 carboxylic acid copolymer partially neutralized with metal ions, the α,β-unsaturated C3-C8 carboxylic acid can be chosen from acrylic acid and/or methacrylic acid.

The ethylene/α,β-unsaturated C3-C8 carboxylic acid copolymer partially neutralized with metal ions is preferably a terpolymer of ethylene, α,β-unsaturated C3-C8 carboxylic acid and α,β-unsaturated C3-C8 dicarboxylic acid partially neutralized with metal ions.

The α,β-unsaturated C3-C8 dicarboxylic acid can be chosen from the same components as already described above.

The ethylene/α,β-unsaturated C3-C8 carboxylic acid/α,β-unsaturated C3-C8 dicarboxylic acid polymer partially neutralized with metal ions can further comprise up to 40 weight percent of an C1-C8 alkyl acrylate softening comonomer, which is preferably chosen among the same components as already described above.

In the ethylene/α,β-unsaturated C3-C8 carboxylic acid/α,β-unsaturated C3-C8 dicarboxylic acid polymer partially neutralized with metal ions, from 5 to 90 percent of the total number of α,β-unsaturated C3-C8 carboxylic acid units in the polymer are neutralized with metal ions, and the α,β-unsaturated C3-C8 carboxylic acid and the α,β-unsaturated C3-C8 dicarboxylic acid can be present in the same amounts as described above, with the same proviso regarding the α,β-unsaturated C3-C8 carboxylic acid and the α,β-unsaturated C3-C8 dicarboxylic acid and the same further proviso regarding the total comonomer content, including the C1-C8 alkyl acrylate softening comonomer, as described above.

The ethylene/α,β-unsaturated C3-C8 carboxylic acid copolymer that are partially neutralized are partially neutralized with metal ions which can be any metal ion of group I or group II of the periodic table. In practice however, the preferred metal ions are sodium, zinc, lithium, magnesium, calcium or a mixture of any of these. More preferred are sodium, zinc, lithium and magnesium. Most preferably, the ion is zinc, lithium and/or combinations thereof.

The partially neutralized ethylene/α,β-unsaturated C3-C8 carboxylic acid copolymers according to the present invention may be prepared by standard neutralization techniques, as disclosed in US 3264272 which is hereby incorporated by reference. The resulting ionomers may have an melt index (MI) of from 0.01 to 100 grams/10 minutes, preferably 0.1 to 30 grams/10 minutes, as measured using ASTM D-1238, condition E (190° C., 2160 gram weight).

The above ionomers can be prepared by free-radical copolymerization methods, using high pressure, operating in a continous manner known in the art, as described in US 4351931, US 5028674, US 5057593, US 5859137.

The thermoplastic composition according to the present invention can be produced by adding the second thermoplastic polymer to the first thermoplastic polymer, such that the second thermoplastic is dispersed in a continuous or co-continuous phase of the first thermoplastic.

The successful use of the thermoplastic composition according to the present invention for manufacturing a ballistic protection system relies mainly on the fact that the second thermoplastic polymer, which has utility in the manufacturing of ballistic protection systems and a melting point as described above, is dispersed in a continuous or co-continuous phase of the first thermoplastic polymer having a higher melting point as described above.

It is therefore desirable to maximize the amount of second thermoplastic polymer in a continuous or co-continuous phase of the first thermoplastic polymer to achieve the highest possible protective effect in ballistic protection systems, even at possible peak operating temperatures in excess of the melting temperature of the second thermoplastic polymer.

US 5866658 discloses thermoplastic compositions which are blends of ionomers with polyamides. US 5866658 is incorporated here by reference.

The thermoplastic composition used according to the present invention comprises from 35 to 55 weight percent of the second thermoplastic polymer, the weight percent based on the total weight of the thermoplastic polymer.

The thermoplastic composition used in a ballistic protection system according to the present invention comprises from 45 to 65 weight percent of the first thermoplastic polymer, the weight percent based on the total weight of the thermoplastic polymer. In addition, the thermoplastic composition may optionally comprise reactive or non-reactive additives such as, but not limited to, colorants, diluants, processing agents,UV additives, fire retardants, mineral fillers, organic fillers, bonding additives, surfactants, aramid pulp, antioxidants, antistatics, slip agents, tackifiers and/or combinations thereof as known in the art and which can be incorporated by known methods.

The thermoplastic composition used according to the invention can optionally comprise al least one plasticizer, which can be chosen from phthalate-based plasticisers, trimellitate-based plasticisers, adipate-based plasticisers, sebacate-based plasticisers, maleate-based plasticisers, organophosphate-based plasticisers, sulfonamide-based plasticisers, benzoate-based plasticisers, epoxidised vegetable oils, poly(ethylene oxide), and/or combinations thereof. Preferably, the at least one plasticizer is a plasticizer having a reactive group such as epoxidised vegetable oils. More preferably, the at least one plasticizer can be chosen among epoxidized soybean oil (ESO), epoxidized linseed oil (ELO), epoxidized tallate, and/or combinations thereof. Most preferably, the at least one plasticizer is epoxidized soybean oil (ESO) or epoxidized linseed oil (ELO).

Fire retardants may be chosen from brominated flame retardants, red phosphorus, asbestos, antimony trioxide, borates, metal hydrates, metal hydroxides, Tetrakis(hydroxymethyl)phosphonium salts, fluorocarbons and/or combination thereof.

The thermoplastic composition used according to the present invention can be obtained by blending the first thermoplastic polymer and the second thermoplastic polymer and can result in various forms such as, but not limited to, pellets, fibers, sheets, fabrics, hotmelts, powders, liquids, and/or combinations thereof. For example, the blending can be done by using a kneader or a single or twin screw extruder, using a melt temperature of between 80°C to 420°C, or in heated melt mixer at a temperature of between 80°C to 420°C.

The present invention provides a ballistic protection system comprising at least one ballistic fabric and a thermoplastic composition, wherein the thermoplastic composition comprises at least a first thermoplastic that has a melting point superior to the melting point of a second thermoplastic, and wherein the second thermoplastic is dispersed in a continuous or co-continuous phase of the first thermoplastic, as described above, and wherein the at least one ballistic fabric is combined with the thermoplastic composition, wherein the second thermoplastic composition comprises from 35 to 55 weight percent of the thermoplastic composition and wherein the at least one ballistic fabric comprises aromatic polyamide fibers, polybenzimidazole fibers or polybenzoxazole fibers.

The ballistic fabric can be woven or non-woven.

Woven fabrics include, but are not limited to, fabrics woven with plain, basket, twill, satin and other complex weaves including, but not limited to, unidirectional, quasi unidirectional, multi-axial weaves and three dimensional materials, alone or in combination.

In a unidirectional fabric the yarns all run in the same direction. In a quasi-unidirectional fabric the yarns may be laid in more than one direction and some yarns may not be totally flat. As used herein, "unidirectional" encompasses both unidirectional and quasi-unidirectional fabric, unless the context requires otherwise.

Non-woven fabrics include, but are not limited to, needle felts, hydroentangled felts, meltblown and/or spunbonded fabrics.

The fiber material to form the at least one ballistic fabric is chosen among aromatic polyamide fibers, such as for example, but not limited to, poly-paraphenylene terephthalamide (commercially available as Kevlar® from DuPont de Nemours), poly-metaphenylene terephthalamide (commercially available as Nomex® from DuPont de Nemours), polybenzimidazoles or polybenzoxazoles, especially poly-para-phenylene-2,6-benzobisoxazole (PBO), 5-amino-2-(p-aminophenyl)-benzimidazole, or poly(2,6-diimidazo[4,5-b-4,5-e]pyridinylene-1,4-(2,5-dihydroxy)phenylene) (PIPD; also referred to as M5) fibers, and/or combinations thereof, provided that the ballistic fabric meets the ballistic performance requirements as known to those skilled in the art.

According to the invention, the fiber material is aromatic polyamide fibers, polybenzimidazole fibers, polybenzoxazole fibers.

According to the present invention, the at least one ballistic fabric is combined with the thermoplastic composition which has already been described in detail in the previous section of the present application.

The combining with the thermoplastic composition can be done by reinforcement. The reinforcement of the at least one ballistic fabric with the thermoplastic composition can be achieved by applying the thermoplastic composition to the ballistic fabric using methods known in the art, such as, but not limited to, lamination, calendaring, heat pressing, powder impregnation, liquid impregnation like for example using hot-melt, aqueous or solvent formulations, extrusion coating, and/or combinations thereof. Preferably, the reinforcement of the at least one ballistic fabric is achieved by lamination with the thermoplastic composition of the present invention.

The thermoplastic composition according to the present invention can be applied in various forms such as, but not limited to, sheets, fabrics, hotmelts, powder, liquids, and/or combinations thereof.

Preferably, the thermoplastic composition is applied as a sheet having a thickness of at least 5 µm. More preferably, the thermoplastic composition is applied as a sheet having a thickness equal to of at least the diameter of one fiber of the ballistic fabric.

The temperature at which the at least one ballistic fabric is reinforced with the thermoplastic composition must be at least at or above the melting of the first thermoplastic polymer of the thermoplastic composition, to enable the right level of interaction between the ballistic fabric and the thermoplastic composition, by for example, but not limited to, permitting the thermoplastic composition to penetrate or adhere onto ballistic fabric to the desired level for the ballistic performance, as known to those skilled in the art, and in order to achieve dimensional stability at the intended use temperatures of the protective system.

In the case where the ballistic fabric is made from poly-paraphenylene terephthalamide the melting point of the first thermoplastic polymer should preferably not exceed 230°C, because prolonged exposure to temperatures in excess of 230°C during the application of the thermoplastic blend or consolidation of multilayered composite panels could damage the poly-paraphenylene terephthalamide fibers and lessen the anti-ballistic properties of the at least one ballistic fabric.

In the case where the at least one ballistic fabric is made from PBO, the melting point of the first thermoplastic polymer should not exceed 300°C, because prolonged exposure to temperatures in excess of 300°C during the application of the thermoplastic blend tends to damage the PBO fiber and lessen the anti-ballistic properties of the at least one ballistic fabric.

In the case where the at least one ballistic fabric is made from PIPD fiber, the melting point of the first thermoplastic polymer should not exceed 450°C, because prolonged exposure to temperatures in excess of 450°C during the application of the thermoplastic blend tends to damage the PIPD fiber and lessen the anti-ballistic properties of the at least one ballistic fabric.

According to the present invention, a plurality of the reinforced ballistic fabric layers can be assembled into a multilayered ballistic protection system.

The multilayered ballistic protection system may further comprise a plurality of untreated ballistic fabrics layers. By untreated it is meant that the ballistic fabrics are not reinforced with the thermoplastic composition according to the present invention.

The reinforced ballistic fabric layers and/or untreated ballistic fabric layers of the multilayered ballistic protection system may further be connected to each other to consolidate the multilayered ballistic protection system by insertion in an outer cover material, by filaments, adhesive, bonding agents, rivets, glue, Velcro or any other means of joining one or more layers of material.

The multilayered ballistic protection system may even further comprise at least one layer of steel, aluminum, titanium, and alloys thereof, ceramics, glasses, sacrificial, explosive sacrificial layers, syntactic foams, felts, rubbers, spacers, or another ballistic or structural fiber reinforced composite, and/or combinations thereof.

The multilayered ballistic protection system may be useful in different applications where protection is sought against ballistic threats, that means in protection garment applications, body armor components and helmets, such as for example, but not limited to, hard armor panels, consolidated hard armor panels, for the protection of people, constructions, sensitive areas, vehicle, aeroplane, helicopters and boats , for example, such as , plate armoring, personnel armoring, house and construction armoring, and/or helmets.

An advantage of using the thermoplastic composition as defined in the claims is that the shelf life is almost unlimited for ballistic fabrics pre-impregnated with said thermoplastic composition, in contrast to ballistic fabrics pre-impregnated with curable thermoset resins widely used in the art of ballistic protection systems, which have a limited shelf life. Ballistic fabrics pre-impregnated with curable thermoset resins slowly cure even when stored at cool temperatures, which is why they need to be processed quickly after pre-impregnation. In addition, thermoset resins heavily used in the field, such as phenolic resins, liberate VOCs (Volatile Organic Compounds) and require additional venting of the storage spaces and additional safety measures during processing.

A further advantage of using the thermoplastic composition in ballistic protection systems according to the present invention is that the ballistic systems can be lighter than other ballistic protection systems using other thermoplastic resins in particular where threats of different nature are considered, such as in, but not limited to, vehicle or personal armoring systems.

The present invention is further defined in the following Examples. It should be understood that these Examples are given by way of illustration only.

### EXAMPLES

### Reference example R1 :

A poly-paraphenylene terephthalamide plain weave fabric, commercially available from DuPont de Nemours, USA under the trademark Kevlar® 129, having an areal weight of 400g/m2 and consisting of fibers having a linear mass of 3140 dtex was pre-impregnated by calendaring it together with a B-staged PVB/Phenolic resin film having an areal density of 55g/m2, according to military standard MIL-DTL-62474F, to yield a pre-impregnated poly-paraphenylene terephthalamide fabric. 18 layers of poly-paraphenylene terephthalamide pre-impregnated fabric resulting from the above process were stacked and compression molded in a parallel plate automated press using a pressure of 10 bars and a temperature of 165°C for 15 minutes.
The resulting stack of 18 layers was retrieved from the hot-press and then allowed to cool to room temperature. The 18 layer composite panel resulting from the above process was conditioned for 24 hours at 25°C at 50% RH before being subjected to ballistic testing.
The results are summarized in Table 1.

### Example E1:

The two ingredients used for the pack assembly were:
1. A poly-paraphenylene terephthalamide plain weave fabric, commercially available from DuPont de Nemours, USA under the trademark Kevlar® 129, having an areal weight of 400g/m2 and consisting of fibers having a linear mass of 3140 dtex.
2. A cast extruded sheet of thermoplastic composition having a thickness of 50 µm and a melting point of 178°C, and consisting of 55% Nylon 12 by weight having a melting point of 180°C, commercially available from Arkema under the trademark Rilsan AESNO, and of 45 % by weight of a zinc ionomer having a melting point of 95°C, having a neutralisation percentage of 60% and composed of ethylene (83 % by weight), methacrylic (11% by weight) acid and maleic acid anhydride (6% by weight), based on the weight of the thermoplastic composition.
The pack assembly was made of 18 layers of poly-paraphenylene terephthalamide fabric which were combined with 18 layers of cast extruded sheet of thermoplastic composition by stacking the 36 layers alternating fabric and resin sheets.
The resulting stack of 36 layers was then compression molded in a parallel plate automated press using a pressure of 10 bar heating from 100°C to 190°C at 5°C/min, was then maintained under pressure for 15 minutes and was then cooled down to 50°C at 5°C/min under pressure. The resulting stack of 36 layers was then conditioned for 24 hours at 25°C at 50% RH before being subjected to ballistic testing. The results are summarized in Table 1.

### Example E2:

The two ingredients used for the pack assembly were:
1. A poly-paraphenylene terephthalamide plain weave fabric, commercially available from DuPont de Nemours, USA under the trademark Kevlar® 129, having areal weight of 400g/m2 and consisting of fibers having a linear mass of 3140 dtex.
2. A cast extruded sheet of thermoplastic composition having a thickness of 50 µm and a melting point of 178°C, and consisting of 60% Nylon 12 by weight, having a melting point of 180°C, commercially available from Arkema under the trademark Rilsan AESNO, and of 40 % by weight of a zinc ionomer with having a melting point of 95°C, having a neutralisation percentage of 60% and composed of ethylene (83 % by weight), methacrylic (11% by weight) acid and maleic acid anhydride (6% by weight), based on the weight of the thermoplastic composition.
The pack assembly was made of 18 layers of poly-paraphenylene terephthalamide fabric were combined with 18 layers of cast extruded sheet of thermoplastic composition by stacking the 36 layers alternating fabric and resin sheets.

The resulting stack of 36 layers was then compression molded in a parallel plate automated press using a pressure of 10 bar heating from 100°C to 190°C at 5°C/min, was then maintained under pressure for 15 minutes and was then cooled down to 50°C at 5°C/min under pressure. The resulting stack of 36 layers was then conditioned for 24 hours at 25°C at 50% RH before being subjected to ballistic testing. The results are summarized in Table 1.

### Comparative example C1:

The two ingredients used for the pack assembly were:
1. A poly-paraphenylene terephthalamide plain weave fabric, commercially available from DuPont de Nemours, USA under the trademark Kevlar® 129, having areal weight of 400g/m2 and consisting of fibers having a linear mass of 3140 dtex.
2. A blown film sheet of thermoplastic composition having a thickness of 40 µm and consisting of 100 % Nylon 6 by weight, having a melting point of 210°C, based on the total weight of the thermoplastic composition, commercially available from DuPont.
The pack assembly was made of 18 layers of poly-paraphenylene terephthalamide fabric were then combined with 18 layers of blown film of thermoplastic composition by stacking the 36 layers alternating fabric and resin sheets.
The resulting stack of 36 layers was then compression molded in a parallel plate automated press using a pressure of 10 bar heating from 100°C to 230°C at 5°C/min, was then maintained under pressure for 15 minutes and was then cooled down to 50°C at 5°C/min under pressure. The resulting stack of 36 layers was then conditioned for 24 hours at 25°C at 50% RH before being subjected to ballistic testing.
The results are summarized in Table 1.

**Table 1**

| | R1 | E1 | E2 | C1 |
|---|---|---|---|---|
| Fragment Simulating Projectile V50 in m/s | 636 | 633 | 629 | 614 |
| 9mm Full Metal Jacket bullet V50 in m/s | 540 | 539 | 547 | 538 |

Table 1 shows the ballistic performances of the tested stacks for each example (E1 and E2), reference example (R1) and comparative example (C2).

The four specimens were tested against fragment simulating projectiles (FSPs) having a weight of 17 grains or 1.1 grams, according to the Stanag 2920 standard. The V50 value is given in meters per second. As can be seen, the specimens that were reinforced with the thermoplastic composition according to the present invention (E1 and E2) show essentially the same V50 value than the reference sample reinforced with a thermoset PVB/Phenolic resin (R2). In contrast, the comparative sample reinforced with polyamide (C1) shows a diminished V50 value compared to the reference sample (R1).

In addition, the four specimens were tested against 9mm Full Metal Jacket bullets from Fiocchi (Boulder City, USA) having a projectile weight of 8 grams according to the EN1522 standard. The V50 value is given in meters per second. As can be seen, the specimens that were reinforced with the thermoplastic composition according to the present invention show essentially the same (E1) or even improved (E2) V50 value compared to the reference sample reinforced with a thermoset PVB/Phenolic resin (R2). In contrast, the comparative sample reinforced with polyamide (C1) shows about the same V50 value compared to the reference sample (R1).

The ballistic protection systems according to the present invention thus show the same performance in a fragment simulating projectile test as ballistic protection systems based on thermoset resins, while at the same time also showing same or increased performances in bullet tests. Thus, the thermoset resins that contain VOCs and have limited shelf life can be replaced by the thermoplastic compositions used according to the present invention, without losing rigidity, dimensional stability or ballistic protection in high temperature environments.

The results also show that one can tailor the ballistic performance regarding the major type of threat considered using a suitable selection of the composition of the thermoplastic composition.

## Claims

1. A ballistic protection system comprising
a. at least one ballistic fabric and;
b. at least one thermoplastic composition for use in ballistic applications, wherein the thermoplastic composition comprises at least a first thermoplastic polymer that has a melting point superior to the melting point of a second thermoplastic polymer, and wherein the second thermoplastic polymer is dispersed in a continuous or co-continuous phase of the first thermoplastic polymer,
wherein the at least one ballistic fabric is combined with the thermoplastic composition,
wherein the thermoplastic composition comprises from 35 to 55 weight percent of the second thermoplastic polymer and wherein the at least one ballistic fabric comprises aromatic polyamide fibers, polybenzimidazole fibers or polybenzoxazole fibers.

2. The ballistic protection system according to claim 1, wherein the diameter of the particles of the second thermoplastic polymer is in the range of 0.01 µm to 15 µm,
wherein the diameter is the smallest characteristic diameter that can be traced within the limits of the particles.

3. The ballistic protection system according to claim 1, wherein the first thermoplastic polymer has a melting point in the range of 75°C to 400°C.

4. The ballistic protection system according to claim 1, wherein the second thermoplastic polymer has a melting point in the range of 25°C to 250°C.

5. The ballistic protection system according to claim 1, wherein the first thermoplastic polymer is chosen among polyvinyls, polyolefins, polycondensates and/or combinations thereof.

6. The ballistic protection system according to claim 1, wherein the first thermoplastic polymer is chosen among polypropylene, polypropylene copolymers, polyurethanes, polyurethane copolymers, polyesters, polyether-ester block copolymers, polyamides, polyamide copolymers and/or combinations thereof.

7. The ballistic protection system according to claim 1, wherein the first thermoplastic polymer is chosen among polypropylene, polyamides, polyamide copolymers, polyester polymers or copolymers and/or combinations thereof.

8. The ballistic protection system according to claim 1, wherein the second thermoplastic polymer is chosen among polyvinyls, polyolefins, polycondensates, thermoplastic elastomeric block copolymers and/or combinations thereof.

9. The ballistic protection system according to claim 1, wherein the second thermoplastic polymer is chosen among polyurethanes, polyurethane copolymers, polybutylenes, polybutylene copolymers, thermoplastic elastomeric block copolymers, ethylene copolymers, polyethylene, and/or combinations thereof.

10. The ballistic protection system according to claim 1, wherein the second thermoplastic polymer can be chosen among thermoplastic elastomeric block copolymers, polyethylene, polyethylene copolymers and/or combinations thereof.

## Patentansprüche

1. Ballistisches Schutzsystem umfassend
a. mindestens einen ballistischen Textilstoff; und
b. mindestens eine thermoplastische Zusammensetzung zur Verwendung bei ballistischen Anwendungszwecken, wobei die thermoplastische Zusammensetzung mindestens ein erstes thermoplastisches Polymer umfasst, das einen Schmelzpunkt über dem Schmelzpunkt eines zweiten thermoplastischen Polymers aufweist, und wobei das zweite thermoplastische Polymer in einer kontinuierlichen oder kokontinuierlichen Phase des ersten thermoplastischen Polymers dispergiert ist,
wobei der mindestens eine ballistische Textilstoff mit der thermoplastischen Zusammensetzung kombiniert wird,
wobei die thermoplastische Zusammensetzung 35 bis 55 Gewichtsprozent des zweiten thermoplastischen Polymers umfasst und wobei der mindestens eine ballistische Textilstoff aromatische Polyamidfasern, Polybenzimidazolfasern oder Polybenzoxazolfasern umfasst.

2. Ballistisches Schutzsystem nach Anspruch 1, wobei der Durchmesser der Teilchen des zweiten thermoplastischen Polymers im Bereich von 0,01 µm bis 15 µm liegt, wobei der Durchmesser der kleinste charakteristische Durchmesser ist, der innerhalb der Grenzen der Teilchen verfolgt werden kann.

3. Ballistisches Schutzsystem nach Anspruch 1, wobei das erste thermoplastische Polymer einen Schmelzpunkt im Bereich von 75 °C bis 400 °C aufweist.

4. Ballistisches Schutzsystem nach Anspruch 1, wobei das zweite thermoplastische Polymer einen Schmelzpunkt im Bereich von 25 °C bis 250 °C aufweist.

5. Ballistisches Schutzsystem nach Anspruch 1, wobei das erste thermoplastische Polymer unter Polvinylen, Polyolefinen, Polykondensaten und/oder Kombinationen davon ausgewählt wird.

6. Ballistisches Schutzsystem nach Anspruch 1, wobei das erste thermoplastische Polymer unter Polypropylen, Polypropylen-Copolymeren, Polyurethanen, Polyurethan-Copolymeren, Polyestern, Polyether-Ester-Blockcopolymeren, Polyamiden, Polyamid-Copolymeren und/oder Kombinationen davon ausgewählt wird.

7. Ballistisches Schutzsystem nach Anspruch 1, wobei das erste thermoplastische Polymer unter Polypropylen, Polyamiden, Polyamid-Copolymeren, Polyesterpolymeren oder -copolymeren und/oder Kombinationen davon ausgewählt wird.

8. Ballistisches Schutzsystem nach Anspruch 1, wobei das zweite thermoplastische Polymer unter Polyvinylen, Polyolefinen, Polykondensaten, thermoplastischen elastomeren Blockcopolymeren und/oder Kombinationen davon ausgewählt wird.

9. Ballistisches Schutzsystem nach Anspruch 1, wobei das zweite thermoplastische Polymer unter Polyurethanen, Polyurethan-Copolymeren, Polybutylenen, Polybutylen-Copolymeren, thermoplastischen elastomeren Blockcopolymeren, Ethylen-Copolymeren, Polyethylen und/oder Kombinationen davon ausgewählt wird.

10. Ballistisches Schutzsystem nach Anspruch 1, wobei das zweite thermoplastische Polymer unter thermoplastischen elastomeren Blockcopolymeren, Polyethylen, Polyethylen-Copolymeren und/oder Kombinationen davon ausgewählt wird.

## Revendications

1. Système de protection balistique comprenant
a. au moins un textile balistique et;
b. au moins une composition thermoplastique pour l'utilisation dans les applications balistiques, où la composition thermoplastique comprend au moins un premier polymère thermoplastique qui a un point de fusion supérieur au point de fusion d'un second polymère thermoplastique, et où le second polymère thermoplastique est dispersé dans une phase continue ou co-continue du premier polymère thermoplastique,
où le au moins un textile balistique est combiné à la composition thermoplastique,
où la composition thermoplastique comprend de 35 à 55 pour cent en poids du second polymère thermoplastique et où le au moins un textile balistique comprend des fibres de polyamide aromatique, des fibres de polybenzimidazole ou des fibres de polybenzoxazole.

2. Système de protection balistique selon la revendication 1, où le diamètre des particules du second polymère thermoplastique se situe dans la plage de 0,01 µm à 15 µm, où le diamètre est le plus petit diamètre caractéristique qui peut être tracé à l'intérieur des limites des particules.

3. Système de protection balistique selon la revendication 1, où le premier polymère thermoplastique présente un point de fusion dans la plage de 75°C à 400°C.

4. Système de protection balistique selon la revendication 1, où le second polymère thermoplastique présente un point de fusion dans la plage de 25°C à 250°C.

5. Système de protection balistique selon la revendication 1, où le premier polymère thermoplastique est choisi parmi les polyvinyles, les polyoléfines, les polycondensats et/ou leurs combinaisons.

6. Système de protection balistique selon la revendication 1, où le premier polymère thermoplastique est choisi parmi le polypropylène, les copolymères de polypropylène, les polyuréthanes, les copolymères de polyuréthane, les polyesters, les copolymères séquencés de polyéther-ester, les polyamides, les copolymères de polyamide et/ou leurs combinaisons.

7. Système de protection balistique selon la revendication 1, où le premier polymère thermoplastique est choisi parmi le polypropylène, les polyamides, les copolymères de polyamide, les polymères ou les copolymères de polyester et/ou leurs combinaisons.

8. Système de protection balistique selon la revendication 1, où le second polymère thermoplastique est choisi parmi les polyvinyles, les polyoléfines, les polycondensats, les copolymères séquencés élastomères thermoplastiques et/ou leurs combinaisons.

9. Système de protection balistique selon la revendication 1, où le second polymère thermoplastique est choisi parmi les polyuréthanes, les copolymères de polyuréthane, les polybutylènes, les copolymères de polybutylène, les copolymères séquencés élastomères thermoplastiques, les copolymères d'éthylène, le polyéthylène, et/ou leurs combinaisons.

10. Système de protection balistique selon la revendication 1, où le second polymère thermoplastique peut être choisi parmi les copolymères séquencés élastomères thermoplastiques, le polyéthylène, les copolymères de polyéthylène et/ou leurs combinaisons.
